# EUROPÄISCHE PATENTSCHRIFT

(11) **EP 2 729 720 B1**
(45) Veröffentlichungstag und Bekanntmachung des Hinweises auf die Patenterteilung: **06.04.2016**
(21) Anmeldenummer: 12735500.6
(22) Anmeldetag: 06.07.2012
(51) Int. Cl.: F16K 11/076, F16K 11/052

(54) **ROHRWEICHE MIT DOSIERFUNKTION**
PIPE SWITCH WITH METERING FUNCTION
VANNE D'AIGUILLAGE AYANT UNE FONCTION DE DOSAGE

(30) Priorität: 08.07.2011 EP 11173264
(43) Veröffentlichungstag der Anmeldung: 14.05.2014
(73) Patentinhaber: BASF SE, 67056 Ludwigshafen am Rhein (DE)
(72) Erfinder: KAMINSKY, Torben, 49448 Lemförde (DE); PAPENFUSS, Horst, 32351 Stemwede-Haldem (DE); BAHR, Christoph, 49459 Lembruch (DE); GIESKER, Hartmut, 49143 Bissendorf (DE); STICH, Ulrich, 49459 Lembruch (DE)
(74) Vertreter: BASF IP Association
(86) Internationale Anmeldenummer: PCT/EP2012/063260
(87) Internationale Veröffentlichungsnummer: WO 2013/007636

(56) Entgegenhaltungen:
- DE-A1- 19 820 914
- DE-A1-102010 005 672
- DE-U1- 8 717 425
- DE-U1- 9 404 280
- JP-A- 7 237 742
- JP-U- 55 078 628
- US-A- 5 368 072

## Beschreibung

Die Erfindung betrifft eine Rohrweiche zur Förderung, Verteilung und Abfüllung von Schüttgut.

Um beispielsweise im Rahmen eines Füllprozesses einen Massenstrom Schüttguts gezielt zu verteilen, werden Rohrweichen verwendet, mit denen aus verschiedenen möglichen Abgabeorten ausgewählt werden kann. Hierbei umfasst die Rohrweiche ein Gehäuse mit einer Zuführungsöffnung und mehreren Abgabeöffnungen, wobei ein Verschlusselement oder ein Lenkungselement zur gezielten Führung des ankommenden Massenstroms verwendet wird. Die Stellung des Verschlusselements wird verändert, um einen Massenstrom zwischen Zuführungsöffnung und einer ausgewählten Abgabeöffnung gezielt zuzulassen, während andere, nicht ausgewählte Abgabeöffnungen keinen Massenstrom erhalten.

Beispielsweise die Druckschrift DE 40 28 582 A1 beschreibt eine Rohrweiche, in der eine drehbare Rohranordnung die Zuführungsöffnung mit einer gewünschten Abgabeöffnung verbindet. Die Rohranordnung ist gegenüber den Zuführungs- und Abgabeöffnungen drehbar, so dass durch geeignete Wahl der Stellung der Rohranordnung eine gewünschte Verbindung von der Weiche hergestellt wird. In der dargestellten Weiche bestehen eine Anzahl von einzelnen, festen Drehstellungen, bei denen die Rohranordnung mit den entsprechenden Öffnungen genau fluchtet. Daher kann mit der in DE 40 28 582 A1 dargestellten Weiche lediglich unter verschiedenen Abgabeöffnungen gewählt werden, wobei jedoch zur feineren Dosierung, etwa beim Abfüllen, eine zusätzliche Vorrichtung notwendig ist.

Wird daher eine bekannte Weiche für Abfüllanlagen verwendet, so ist grundsätzlich eine zweite, individuelle Dosiervorrichtung notwendig, mit der der Füllstrom gezielt begrenzt werden kann, um ein gewünschtes Füllgewicht genau erreichen zu können. Vor allem ergibt sich jedoch durch eine derartige Aufteilung ein hoher Platzbedarf, der bei zahlreichen Anwendungen nicht gegeben ist. Daher sind derartige Abfüllvorrichtungen hinsichtlich der Anwendungsbreite stark beschränkt.

Ein weiterer Nachteil derartiger Abfüllsystem besteht darin, dass keine unterbrechungsfreie Dosierung möglich ist. Als eine unterbrechungsfreie Dosierung werden Dosierungsverfahren bezeichnet, die ermöglichen, dass der Gesamtmassenstrom während des ganzen Abfüllzeitraumes konstant bleibt. Bei der eingangs beschriebenen Kombination aus Weiche und Dosiervorrichtungen wird der Massenstrom mindestens während des Umschaltvorganges eines Verschluss- oder Lenkungselementes von einem Abgabeort auf einen weiteren Abgabeort temporär unterbrochen. Dadurch ist die Abfüllkapazität der Abfüllanlage, die eine derartige Kombination verwendet, reduziert. Ferner ergeben sich während der Unterbrechung Blockaden, insbesondere bei haftendendem, klebendem oder schwer fließendem Schüttgut, d.h. bei nicht fließendem, kohäsivem oder sehr kohäsivem Schüttgut.

In der Schüttguttechnik wird ein Schüttgut als leicht fließend oder gut fließend bezeichnet, wenn es ohne Aufwand zum Fließen zu bringen ist, beispielsweise, wenn es lediglich aufgrund der Schwerkraft aus einem nach unten offenen Behälter fließt. Bei einem schwer fließenden oder schlecht fließenden Schüttgut muss eine Kraft aufgewandt bzw. eine Hilfsströmung verwendet werden, um das Fließen zu ermöglichen oder zu erleichtern. Aus diesem Grund sind bekannte Kombinationen von Weichen und Dosiervorrichtungen nur für Schüttgut mit hoher Fließfähigkeit geeignet, bei dem eine Unterbrechung des Massestroms nicht zur Blockade oder zu Anhäufungen innerhalb des Abfüllsystems führt.

Die FR 2 674 227 A1 offenbart eine Weiche mit einem Verschlusselement und einem Stellsystem. Das Verschlusselement ist halbkegelförmig ausgebildet und ist mittels des Stellsystems um eine Achse innerhalb eines Gehäuses schwenkbar, um so zwei Abgabeöffnungen entweder zu verschließen oder zu öffnen.

Die DE 44 03 210 A1 offenbart einen Gutmengenverteiler mit einem Verschlusselement in Form von zwei Klappen und mit einem Stellsystem. Die Klappen sind im Inneren eines Gehäuses mittels Klappen-Wellen unabhängig voneinander drehbar. Die Klappen können Abgabeöffnungen verschließen bzw. freigeben.

Die US 2,436,624 A offenbart eine Weiche mit einem Verschlusselement in Form eines drehbaren Verteilers, der aus einem geneigten Wandabschnitt und einem vertikalen Wandabschnitt sowie einem Flanschring besteht, und mit einem Stellsystem.

Die DE9404280U1 offenbart eine Rohrweiche gemäß dem Oberbegriff des Anspruchs 1.

Es ist daher Aufgabe der Erfindung, ein für Abfüllanlagen geeignetes Konstrukt vorzusehen, das eine größere Verwendungsbreite, insbesondere auch für nicht fließende, sehr kohäsive oder kohäsive Schüttgüter, ermöglicht.

### Offenbarung der Erfindung

Diese Aufgabe wird gelöst durch die Rohrweiche nach Anspruch 1, wobei die davon abhängigen Ansprüche bevorzugte Ausführungsformen betreffen.

Die Erfindung betrifft eine Rohrweiche gemäß dem Anspruch 1 mit einem Gehäuse, einem Verschlusselement und einem Stellsystem, das einen Antrieb und eine Steuerung umfasst. Das Gehäuse umfasst eine Innenwand. In der Innenwand sind eine Zuführungsöffnung und mindestens zwei Abgabeöffnungen vorgesehen. Das Verschlusselement ist zwischen der Zuführungsöffnung und den Abgabeöffnungen innerhalb der Innenwand des Gehäuses angeordnet. Das Verschlusselement ist zur Änderung seiner Stellung relativ zu den Abgabeöffnungen drehbar gelagert. Das Verschlusselement ist bewegungsübertragend mit dem Stellsystem und insbesondere mit dem Antrieb des Stellsystems verbunden. Das Stellsystem ist ferner zur Änderung der Stellung des Verschlusselements eingerichtet. Das Stellsystem ist eingerichtet, das Verschlusselement gemäß einer Vielzahl von unterschiedlichen Zwischenstellungen relativ zu den Abgabeöffnungen einzustellen. Dabei sieht das Stellsystem zusammen mit dem Verschlusselement vor, dass in jeder Zwischenstellung die Summe der von dem Verschlusselement nicht abgedeckten Querschnittsflächen der Abgabeöffnungen im Wesentlichen konstant ist. Da die Summe der nicht abgedeckten Querschnittsflächen in jeder der Zwischenstellungen bekannt ist, ermöglicht dies im Gegensatz zu dem oben genannten Stand der Technik sowohl eine Grobdosierung als auch eine Feindosierung, wie nachstehend noch ausführlicher erläutert wird. Dadurch kann die Rohrweiche die Dosierung auf mindestens zwei Abgabeöffnungen exakt einstellen.

In zumindest einer der Zwischenstellungen, die die erfindungsgemäße Rohrweiche vorsieht, sind die mindestens zwei Abgabeöffnungen durch das Verschlusselement nur teilweise gegenüber der Zuführungsöffnung abgedeckt. Die mindestens zwei Abgabeöffnungen sind in mehreren oder in allen Zwischenstellungen, die die erfindungsgemäße Rohrweiche vorsieht, durch das Verschlusselement nur teilweise gegenüber der Zuführungsöffnung abgedeckt. Die Zwischenstellungen, in denen die mindestens zwei Abgabeöffnungen durch das Verschlusselement nur teilweise gegenüber der Zuführungsöffnung abgedeckt sind, können auch als Übergangsstellungen bezeichnet werden, da sie sich während des Übergangs von einer Endposition zur anderen ergeben. Die zumindest eine oder die mehreren Zwischenstellungen, in denen das Verschlusselement nur teilweise gegenüber der Zuführungsöffnung abgedeckt ist, werden von der erfindungsgemäßen Rohrweiche, insbesondere von dem Stellsystem und vorzugsweise von der Steuerung oder von dem Antrieb vorgesehen.

Das Stellsystem und insbesondere die Steuerung oder der Antrieb sind eingerichtet, die zumindest eine oder die mehreren Zwischenstellungen anzusteuern, in denen das Verschlusselement eine Abgabeöffnung oder vorzugsweise zwei Abgabeöffnungen nur teilweise gegenüber der Zuführungsöffnung abdeckt. Ferner ist das Verschlusselement durch seine Position und Verbindung mit dem Stellsystem und insbesondere mit dem Antrieb eingerichtet, die zumindest eine oder die mehreren Zwischenstellungen, in denen das Verschlusselement die mindestens eine Abgabeöffnung nur teilweise gegenüber der Zuführungsöffnung abgedeckt, anzusteuern und zu halten.

Die Rohrweiche ist eingerichtet, in dieser zumindest einen Zwischenstellung, in der das Verschlusselement die zwei Abgabeöffnungen nur teilweise gegenüber der Zuführungsöffnung abdeckt, den Massenstrom von der Zuführungsöffnung den mindestens zwei Abgabeöffnungen zuzuleiten. Der von der Zuführungsöffnung kommende Massenstrom wird dadurch aufgeteilt auf die mindestens zwei Abgabeöffnungen. Dies ermöglicht eine durchgehende Befüllung und einen "fliegenden Wechsel" zwischen den Abgabeöffnungen. Insbesondere wird dadurch verhindert, dass der durch die Zuführungsöffnung fließende Massenstrom temporär unterbrochen wird. In einer bevorzugten Ausprägung dieses Erfindungsaspekts erstreckt sich das Verschlusselement, das als Schieber ausgebildet ist, über eine Umfangsdistanz, die kürzer ist als die Summe aus den Breiten der Abgabeöffnungen und der umfänglichen Länge der Innenwand zwischen den Abgabeöffnungen.

Mit dieser Eigenschaft kann man den Gesamtmassenstrom gegenüber dem maximalen Massenstrom bei gut fließenden, nicht klebenden Schüttgütern von der Dosierweiche auf die Durchsatzkapazitäten von Abfüllsystemkomponenten einstellen, die der Dosierweiche nachgeschaltet sind. Der maximale Massenstrom ist der Massenstrom, bei dem eine Abgabeöffnung vollständig gegenüber der Zuführungsöffnung geöffnet ist.

Vorzugsweise ist das Stellsystem eingerichtet, das Verschlusselement kontinuierlich einzustellen, wobei im Wesentlichen unendlich viele Stellungen eingestellt werden können. Ein derartiges Stellsystem wird als kontinuierliches Stellsystem bezeichnet. Alternativ ist das Stellsystem eingerichtet, das Verschlusselement in einer Vielzahl unterschiedlicher, diskreter Stellungen vorzusehen.

Die Steuerung des Stellsystems ist zur Ansteuerung des Antriebs mit diesem verbunden. Vorzugsweise ist diese Verbindung elektrisch und die Steuerung des Stellsystems steuert den Antrieb mittels elektrischer Steuersignale. Der Antrieb dient als Aktuator, vorzugsweise als rotatorischer Aktuator, der insbesondere als elektromechanischer Aktuator aufgebaut ist. Der Antrieb ist zur Positionierung des Verschlusselements mit diesem bewegungsübertragend verbunden. Die Steuerung ist vorzugsweise eine elektrische Steuerung. Die Steuerung kann eine festverdrahtete Steuerung sein oder eine speicherprogrammierbare Steuerung, beispielsweise eine Steuerung der Simatic-Produktreihe der Siemens AG. Ferner kann die Steuerung einen Mikroprozessor aufweisen, der mit einem elektronischen Speicher verbunden ist, auf dem ein Programm gespeichert ist, das von dem Mikroprozessor verarbeitbar ist oder von dem Mikroprozessor verarbeitet wird. Insbesondere weist das Programm Befehle auf, die neben den Endstellungen auch die Zwischenstellung vorsehen.

Die Steuerung kann Teil einer Gesamtsteuerung sein, wobei die Gesamtsteuerung einen Eingang für Gewichtsinformation aufweist, die von einer Waage erzeugt wird, welche das Gewicht eines Gebindes erfasst, das mittels der erfindungsgemäßen Rohrweiche befüllt wird. Die Gesamtsteuerung kann in Kombination hiermit oder alternativ einen Eingang für Füllstandsinformation aufweisen, die den Füllstand eines Gebindes erfasst, das mittels der erfindungsgemäßen Rohrweiche befüllt wird.

Wie oben erwähnt, sieht das Stellsystem zusammen mit dem Verschlusselement vor, dass in jeder Zwischenstellung die Summe der von dem Verschlusselement nicht abgedeckten Querschnittsflächen der Abgabeöffnungen im Wesentlichen konstant ist. Hierbei kann die Rohrweiche mit zwei Abgabeöffnungen ausgestattet sein, d.h. mit der ersten und der zweiten Ausgabeöffnung. Eine Abweichung von weniger als 20%, 10%, 5% oder 2% der Summe der Querschnittsfläche wird als im Wesentlichen konstant bezeichnet. Ferner ist die Summe der Massenströme durch die beiden Abgabeöffnungen in jeder Zwischenstellung im Wesentlichen konstant. In diesem Zusammenhang wird eine Abweichung von weniger als 20%, 10%, 5% oder 2% der Summe der Massenströme als im Wesentlichen konstant bezeichnet. Dies wird beispielsweise erreicht dadurch, dass bei der Änderung von einer Zwischenstellung auf eine andere das Verschlusselement die eine Abgabeöffnung um das Maß zusätzlich öffnet, um welches bei dieser Änderung die andere Abgabeöffnung von dem Verschlusselement geschlossen wird. In einer spezifischen Ausführungsform ist das Verschlusselement ein Schieber, der sich über eine Umfangsdistanz erstreckt, die im Wesentlichen der Summe aus der Breite einer Abgabeöffnung und der umfänglichen Länge der Innenwand zwischen den Abgabeöffnungen entspricht. Vorzugsweise weisen die Abgabeöffnungen die gleiche Querschnittsform auf und haben insbesondere den gleichen Querschnitt. Als Querschnittsflächen und insbesondere als nicht abgedeckte Querschnittsflächen der Abgabeöffnungen werden bei Ausbildung des Verschlusselements als Schieber die Querschnittsflächen bezeichnet, die der Schieber nicht abdeckt.

Allgemein können die Querschnittsflächen den kleinsten Querschnittsflächen des Massenstroms innerhalb der Rohrweiche entsprechen, wobei der Massenstrom vorzugsweise der maximal mögliche Massenstrom ist. Ferner kann zur Erläuterung dieses Aspekts der Erfindung ein Kanal betrachtet werden, der durch die Rohrweiche hindurch verläuft und entlang dem der Massenstrom geführt wird. An der schmalsten Stelle des Kanals liegen die oben genannten Querschnittsflächen - senkrecht zum Verlauf des Kanals - vor. Die schmalste Stelle des Kanals ist bei der Ausbildung des Verschlusselements als Schieber die Stelle, an der der Schieber auf die betreffende Ausgabeöffnung bzw. Ausgabeöffnungen trifft.

Gemäß einer weiteren Betrachtungsweise entsprechen die Querschnittsflächen ein effektiven Querschnitt , durch den der Massenstrom (exklusiv) bestimmt ist, wobei der effektive Querschnitt einer punktuellen Verjüngung eines ansonsten den Massenstrom nicht verringernden Kanals entspricht, durch den der Massenstrom geführt wird. Hierbei sind die Massenströme des realen Systems und des vorgenannten Modells gleich, und der effektive Querschnitt basiert auf dem vorgenannten vereinfachenden Modell einer einzigen, punktuellen Verjüngung des Querschnitts, die auch als Blende betrachtet werden kann.

Als Stellung bzw. Zwischenstellung wird die Orientierung des Verschlusselements relativ zu den Abgabeöffnungen, relativ zu der Zuführungsöffnung und insbesondere relativ zu den Abgabeöffnungen und der Zuführungsöffnung bezeichnet. Der Begriff "Stellungen" umfasst Zwischenstellungen sowie Endstellungen. Endstellungen sind hierbei die Stellungen des Verschlusselements, in denen eine Abgabeöffnung gegenüber der Zuführungsöffnung vollständig abgedeckt ist und eine weitere Abgabeöffnung gegenüber der Zuführungsöffnung vollständig geöffnet ist. Bei Ausführungen von Rohrweichen mit mehr als zwei Abgabeöffnungen sind die Endstellungen Stellungen, indem mindestens eine Abgabeöffnung gegenüber der Zuführungsöffnung vollständig von dem Verschlusselement abgedeckt wird und zumindest eine andere der Abgabeöffnungen vollständig gegenüber der Zuführungsöffnung geöffnet ist. Zwischenstellungen sind Stellungen, in denen eine Abgabeöffnung nur teilweise abgedeckt ist oder nur teilweise gegenüber der Zuführungsöffnung geöffnet ist. Vorzugsweise ist in den Zwischenstellungen der Massenstrom durch jede der Abgabeöffnungen gegenüber einer Endstellung eingeschränkt, in der die Abgabeöffnung vollständig gegenüber der Zuführungsöffnung geöffnet ist. In einer Zwischenstellung ist der Massenstrom bzw. der effektive Durchmesser des Massenstroms durch die betreffende Abgabeöffnung größer als Null und kleiner als der maximal mögliche Massenstrom, der sich in einer offenen Endstellung ergibt.

Die mit der erfindungsgemäßen Rohrweiche ermöglichte unterbrechungsfreie Dosierung hat den Vorteil, dass die Abfüllkapazität der Anlage pro Zeit erhöht ist, da der Gesamtmassenstrom beim Umschalten zwischen den Abgabeöffnungen nicht verändert wird. Ferner bietet die erfindungsgemäße Rohrweiche den Vorteil, dass auch haftendes, klebendes oder schwer fließendes Material abgefüllt werden kann, da die erfindungsgemäße Rohrweiche einen zeitlich kontinuierlichen Gesamtmassenstrom auch während des Umschaltens zwischen zwei Abgabeöffnungen ermöglicht. Der Gesamtmassenstrom ist der Massenstrom durch die Zuführungsöffnung und entspricht gleichermaßen der Summe der Massenströme durch die Abgabeöffnungen der Rohrweiche.

Die erfindungsgemäße Rohrweiche kann für unterschiedliche Arten von Schüttgütern verwendet werden, beispielsweise für glasartige, keramische, metallische, polymere oder mineralische Materialien. Die Schüttgüter können zum Beispiel fest, ausgehöhlt, porös, elastisch, deformierbar, locker, behandelt, geschliffen oder gemahlen sein. Die Schüttgutpartikel, welche das Schüttgut bilden, können in unterschiedlichsten Formen vorliegen, beispielsweise als Blasen, Perlen, Pulver, Puder, Granulat, Fasern, Flocken, Quader, Kugeln, Ellipsoide oder Mischungen daraus.
Insbesondere ist die erfindungsgemäße Rohrweiche für Schüttgut geeignet, das zum Verblocken neigt und schwer fließend ist, beispielsweise Schüttgut bestehend aus elastischen Materialien. Besonders vorteilhaft wird die erfindungsgemäße Rohrweiche für Schüttgüter verwendet, bei denen es sich um ein Granulat oder Pellets aus thermoplastischem Kunststoff, insbesondere aus thermoplastischem Polyurethan, handelt. Als Schüttgut kommen ferner grob- oder feinkörnige Granulate in Betracht, beispielsweise Baustoffe wie Sand, Kies, Schotter, oder Lebensmittel und Saatgut, über Pellets bis hin zu pulverförmigen Substanzen wie Pigmenten. Ferner kommen als Schüttgut Polymerpartikel in Betracht, deren Polymerisationsprozess zumindest an der Oberfläche noch nicht vollständig abgeschlossen ist, und die daher kohäsive Eigenschaften haben. Zudem kommen als Schüttgut Klebstoffpartikel in betracht, die als naturgegebene Eigenschaft eine klebrige Oberfläche aufweisen und daher kohäsive Eigenschaften haben.
Die erfindungsgemäße Rohrweiche eignet sich insbesondere für die oben genannten Schüttgüter, die kohäsiv sein können bzw. die eine geringe Fließfähigkeit haben und daher nicht fließend, sehr kohäsiv oder kohäsiv sind. Als Maß für die Fließfähigkeit dient das Verhältnis von Verfestigungsspannung zu Druckfestigkeit. Dieses Maß wird beispielsweise in "Pulver und Schüttgüter", Prof. Dr.-Ing. Dietmar Schulze, Springer-Verlag, 2006 zur Charakterisierung der Fließfähigkeit verwendet. Gemäß Seite 42 dieser Veröffentlichung entspricht ein Verhältnis der Verfestigungsspannung zu Druckfestigkeit von < 1 nicht fließendem Schüttgut, ein Verhältnis zwischen 1 und 2 sehr kohäsivem Schüttgut, ein Verhältnis zwischen 2 und 4 kohäsivem Schüttgut, ein Verhältnis zwischen 4 und 10 leicht fließendem Schüttgut, und ein Verhältnis von größer 10 frei fließendem Schüttgut.

Die Erfindung ermöglicht insbesondere das kontinuierliche Abfüllen von nicht fließendem, sehr kohäsivem oder kohäsivem Schüttgut, das durch Anwendung der Erfindung während des Abfüllens nicht wieder angehalten werden muss, wenn es einmal zum Fließen gebracht wurde.

Eine Vielzahl unterschiedlicher Zwischenstellungen, in denen das Stellsystem das Verschlusselement einstellt, entspricht mindestens zwei, mindestens zehn oder mindestens fünfzig unterschiedlichen Stellungen. In den Zwischenstellungen ist eine der Abgabeöffnungen nur teilweise abgedeckt, wobei sich durch die unterschiedlichen Stellungen unterschiedliche Massenströme ergeben. Vorzugsweise entsprechen eine Vielzahl unterschiedlicher Zwischenstellungen einer Anzahl von Stellungen, die viele unterschiedliche Beschränkungen des maximalen Massenstroms erlauben, wobei der maximale Massenstrom bei einer vollständig geöffneten Abgabeöffnung auftritt.

Beispielsweise entsprechen eine Vielzahl unterschiedlicher Zwischenstellungen mindestens zehn unterschiedlichen Stellungen mit unterschiedlichen Massenströmen, die insbesondere linear und gleichmäßig zwischen 0 und 100% des maximalen Massenstroms verteilt sind. Anstatt 10 können 20, 50, 100 oder mehr unterschiedliche Zwischenstellungen vorgesehen sein. Als kontinuierliches Stellsystem wird hierbei ein Stellsystem angesehen, das zwischen den beiden Endstellungen auch zahlreiche weitere Zwischenstellungen zulässt. Als kontinuierliches Stellsystem wird auch ein quasi-kontinuierliches Stellsystem mit einer Vielzahl verschiedener Zwischenstellungen angesehen, d.h. mit mindestens 10, 20, 50 oder 100 verschiedenen Zwischenstellungen. Die Zwischenstellungen werden gezielt angesteuert und entsprechen nicht zufälligen Überstreichungen von Stellungen zwischen den Endstellungen, die sich beim Umstellen von einer Endstellung auf die andere ergeben. Schließlich kann die Vielzahl unterschiedlicher Zwischenstellungen auch eine unendliche Vielzahl sein, so dass die Zwischenstellungen kontinuierlich oder quasi-kontinuierlich (mit einer Vielzahl an Zwischenstellungen) verändert werden. Die Zwischenstellungen können in Form von Anteilen an einer vollständigen Öffnung einer Abgabeöffnung dargestellt sein, beispielsweise als Flächenanteil einer Öffnungs-Querschnittsfläche, oder beispielsweise anhand von verschiedenen Winkeln, so dass jede Zwischenstellung einen anderen Winkelwert vorsieht. Der Winkel betrifft hierbei die Stellung, d.h. die Orientierung des Verschlusselements relativ zur Abgabeöffnung und/oder relativ zu zumindest einer Zuführungsöffnung. Der Antrieb des Stellsystems ist hierbei vorzugsweise mechanisch, elektromechanisch oder pneumatisch, kann jedoch auch auf anderen Betätigungstechniken basieren. Die Steuerung, die den Antrieb ansteuert, ist vorzugsweise elektrisch, kann jedoch auch mechanische oder pneumatische Steuersignale an den Antrieb abgeben. Ein kontinuierliches Stellsystem weist eine kontinuierliche Steuerung auf, die für die Ansteuerung von Endstellungen und Zwischenstellungen eingerichtet ist. Alternativ oder in Kombination hierzu kann ein kontinuierliches Stellsystem einen kontinuierlichen Antrieb aufweisen, der eingerichtet ist, das Verschlusselement gemäß Endstellungen und Zwischenstellungen zu stellen.

Die erfindungsgemäße Rohrweiche ermöglicht es, nicht nur eine spezifische Abgabeöffnung gegenüber der Zuführungsöffnung auszuwählen, sondern auch beispielsweise am Ende oder zu Beginn eines Befüllungszyklus den Massenstrom geeignet zu dosieren. Dadurch werden zwei Funktionen, nämlich die Auswahl und die Dosierung durch die erfindungsgemäße Rohrweiche vorgesehen, so dass kein zusätzliches Dosierelement notwendig ist. Es ergeben sich signifikante Platzeinsparungen, wodurch auch insbesondere Anwendungen in Betracht kommen, bei denen wenig Raum für die Komponenten zur Auswahl und Dosierung zur Verfügung steht. Darüber hinaus werden Kosten in signifikanter Weise eingespart, da keine zusätzlichen Gehäuse oder Komponenten erforderlich sind, um beide Funktionen vorzusehen. Ferner ist durch die Vereinigung der Dosierfunktion und der Auswahlfunktion in der erfindungsgemäßen Rohrweiche die Anschlusstechnik vereinfacht, da nur ein einzelner Anschluss an die Zuführungsöffnung ohne weitere Schnittstellen zu weiteren Komponenten erforderlich ist. Schließlich kann die Erfindung umgesetzt werden, indem der Antrieb in einer Weise angesteuert wird, dass eine kontinuierliche oder quasi-kontinuierliche Einstellung des Verschlusselements vorgesehen wird. Damit können zahlreiche Komponenten bereits erhältlicher Weichensteuerungen durch einfache Modifikation weiter verwendet werden.

Vorteilhafterweise ist das Verschlusselement eingerichtet, in einer ersten Endstellung eine erste der zwei Abgabeöffnungen vollständig abzudecken, während die zweite der zwei Abgabeöffnungen gegenüber der Zuführungsöffnung zumindest teilweise geöffnet ist. Ferner ist das Verschlusselement vorzugsweise eingerichtet, in einer zweiten Endstellung, die zweite Abgabeöffnung vollständig abzudecken, während die erste Abgabeöffnung gegenüber der Zuführungsöffnung zumindest teilweise geöffnet ist. Hierbei sind die erste Endstellung und die zweite Endstellung entgegengesetzt zueinander. Das Stellsystem, d.h. der Antrieb und/oder die Steuerung, ist bzw. sind eingerichtet, das Verschlusselement gemäß den Zwischenstellungen sowie gemäß der ersten oder zweiten Endstellung anzusteuern. Das Stellsystem sieht somit einen breiten Einstellungsbereich vor, der von der ersten bis zur zweiten Endstellung reicht und zudem die Zwischenstellungen zwischen der ersten und der zweiten Endstellung umfasst. Dabei sieht das Stellsystem und insbesondere die Steuerung sowohl eine Auswahlfunktion vor, indem die erste und die zweite Endstellung angesteuert werden können, als auch eine Dosierfunktion bzw. Feindosierfunktion vor, indem die Zwischenstellungen einzeln angesteuert werden können. Ferner wird durch die vorgenannten Eigenschaften des Verschlusselements ermöglicht, dass gleichzeitig eine der Abgabeöffnungen abgedeckt ist und somit nicht ausgewählt ist, während die andere Abgabeöffnung zur Ausführung der Dosierfunktion zumindest teilweise geöffnet ist. Dies ermöglicht eine effiziente Nutzung der Rohrweiche bei Abfüllprozessen, die eine präzise Dosierung erfordern, und bei denen Abgabeöffnungen alternierend ausgewählt werden.

Weiterhin kann das Stellsystem und insbesondere dessen Steuerung eingerichtet sein, das Verschlusselement gemäß mehreren Übergangsstellungen relativ zu den Abgabeöffnungen anzusteuern. Die mehreren Übergangsstellungen bilden hierbei eine Untergruppe der Zwischenstellungen. Das Verschlusselement ist eingerichtet, in den Übergangsstellungen sowohl die erste als auch die zweite Abgabeöffnung teilweise abzudecken. Dadurch lassen sich die Massenströme durch beide bzw. durch mehrere Abgabeöffnungen gleichzeitig dosieren, beispielsweise um einen Abfüllprozess durch die erste Abgabeöffnung zu beenden, während ein Abfüllprozess durch die zweite Abgabeöffnung beginnt, wodurch zeitlich überlappende Abfüllprozesse und deren Dosierung ermöglicht werden.

Damit ist es möglich, unterbrechungsfrei und mit zeitlich konstantem Gesamtmassenstrom, der durch die Zuführungsöffnung geleitet wird, abzufüllen. Da keine Unterbrechungen des Gesamtmassenstroms auftreten, besteht keine Gefahr der Blockierung, auch bei kohäsiven, sehr kohäsiven oder nicht fließenden Schüttgütern.

Weiterhin ist vorgesehen, dass das Verschlusselement einen Schieber umfasst, dessen Verlauf der Innenwand folgt, entweder mit einem radialen Versatz zu der Mitte des Innenraums hin, der von der Innenwand umschlossen ist, oder ohne radialen Versatz. Somit folgt der Verlauf des Schiebers mit einem radialen Versatz der Innenwand oder folgt unmittelbar der Innenwand. Ein radialer Versatz entspricht beispielsweise einem Versatz zur Mitte eines Innenraums hin, welcher von der Innenwand begrenzt wird. Der Schieber ist um die Mitte des Innenraums der Innenwand drehbar gelagert. Die Innenwand und der Schieber erstrecken sich entlang eines Abschnitts eines Zylinders oder einer Kugel, oder entlang eines anderen geometrischen Rotationskörpers. Der Schieber erstreckt sich somit nicht entlang einer Ebene, sondern entlang der Innenwand, welche der Drehbewegung des Schiebers folgt. Dadurch kann das als Schieber ausgeführte Verschlusselement durch eine einfache Drehbewegung angesteuert werden. Hierbei kann die Steuerung eine Drehbewegung vorsehen, die über den Antrieb an den Schieber übertragen wird, so dass die Drehbewegung der Steuerung unmittelbar in die Stellung des Verschlusselements, d.h. in die Stellung des Schiebers, einfließt. Hierbei sieht die Steuerung eine Drehbewegung vor, indem die Steuerung entsprechende Steuersignale abgibt. Diese werden an den Antrieb gegeben, der die Drehbewegung erzeugt und an das Verschlusselement, bspw. an den Schieber, weitergibt.

Weiterhin ist vorgesehen, dass die Breite des Schiebers in Umfangsrichtung der Innenwand größer ist als der Abstand zwischen einander zugewandten Seitenwänden der ersten und der zweiten Abgabeöffnung in Umfangsrichtung der Innenwand. Die einander zugewandten Seitenwände entsprechen den Abschnitten der Abgabeöffnungen, die sich in Umfangsrichtung der Innenwand am nächsten liegen. Der Abstand zwischen einander zugewandten Seitenwänden kann auch als innerer Abstand oder als minimaler Abstand zwischen den zwei Abgabeöffnungen bezeichnet werden. Dadurch, dass die Breite des Schiebers größer ist als dieser innere Abstand, kann der Schieber eine der Abgabeöffnungen vollständig schließen, während die andere Abgabeöffnung teilweise abgedeckt ist. Dies ermöglicht eine Auswahl der nur teilweise abgedeckten Abgabeöffnung, während die teilweise abgedeckte Abgabeöffnung gleichzeitig zur Ausführung der Dosierfunktion in einem Querschnitt vom Schieber gemäß Ansteuerung verringert ist.

Weiterhin kann vorgesehen sein, dass die Breite des Schiebers in Umfangsrichtung der Innenwand kleiner ist als der Abstand zwischen einander abgewandten Seitenwänden der ersten und der zweiten Abgabeöffnung in Umfangsrichtung der Innenwand. Der Abstand zwischen einander abgewandten Seitenwänden kann auch als äußerer Abstand oder maximaler Abstand bezeichnet werden. Dieser Abstand entspricht dem maximalen Abstand zwischen Abschnitten der ersten und der zweiten Abgabeöffnung entlang der Innenwand. Dadurch, dass die Breite des Schiebers in Umfangsrichtung kleiner ist als der äußere Abstand, kann der Schieber eine der Abgabeöffnungen vollständig abdecken, während eine andere Abgabeöffnung noch teilweise geöffnet ist. Dadurch kann gleichzeitig die teilweise geöffnete Abgabeöffnung ausgewählt werden, und der Massenstrom kann durch diese Abgabeöffnung dosiert werden.

Weiterhin kann vorgesehen sein, dass der Abstand zwischen einander zugewandten Seitenwänden der ersten und der zweiten Abgabeöffnung in Umfangsrichtung der Innenwand größer ist als die Breite der ersten Abgabeöffnung in Umfangsrichtung der Innenwand und größer ist als die Breite der zweiten Abgabeöffnung im Umfangsrichtung der Innenwand. Der Abstand zwischen einander zugewandten Seitenwänden kann auch hier als der innere Abstand bezeichnet werden und entspricht dem oben aufgeführten inneren Abstand. Dadurch, dass der innere Abstand größer ist als die Breite der Abgabeöffnungen, kann eine Abgabeöffnung vollständig abgedeckt sein, während eine andere Abgabeöffnung teilweise geöffnet ist und der Massenstrom durch die teilweise geöffnete Abgabeöffnung dosiert wird. Insbesondere kann die Stellung zur Dosierung der teilweise geöffneten Abgabeöffnung durch diese Maßnahme geändert werden, ohne dass die vollständig abgedeckte Abgabeöffnung geöffnet werden muss.

Weiterhin kann vorgesehen sein, dass die Breite des Schiebers in Umfangsrichtung größer ist als die Breite der Zuführungsöffnung in Umfangsrichtung der Innenwand. In diesem Fall lässt sich durch den Schieber der Querschnitt der Zuführungsöffnung vollständig abdecken. Der Massenstrom des Schüttguts wird somit vollständig unterbrochen, wenn der Schieber in einer Blockierstellung ist, in der dieser die Zuführungsöffnung vollständig abdeckt. In dieser Blockierstellung wird das Befüllen vollständig unterbrochen, ohne dass sich die Rohrweiche mit Schüttgut füllt, das ggf. verklumpen könnte. In dem Fall einer Störung an einem der Rohrweiche nachgeschalteten Apparate kann somit ein schneller Abbruch des Schüttgutstromes gewährleistet werden. Da die Rohrweiche in der Blockierstellung kein Schüttgut enthält, kann der Füllprozess wieder aufgenommen werden, ohne ggf. blockierendes Schüttgut aus der Rohrweiche entfernen zu müssen. In dieser Ausführungsform ist das Stellsystem ferner eingerichtet, neben den Endstellungen und den Zwischenstellungen auch die vorgenannte Blockierstellung vorzusehen und das Verschlusselement gemäß der Blockierstellung einzustellen.

Das Stellsystem und insbesondere die Steuerung weist einen Feindosierungszustand und einen Grobdosierungszustand auf. Das Stellsystem ist eingerichtet, den Grobdosierungszustand einzunehmen, wenn keine der beiden Abgabeöffnungen nur teilweise von dem Verschlusselement abgedeckt ist. Der Grobdosierungszustand entspricht einer Endstellung der Klappen und sieht die Auswahlfunktion vor. Das Stellsystem ist ferner eingerichtet, den Feindosierungszustand einzunehmen, wenn zumindest eine der beiden Abgabeöffnungen nur teilweise von dem Verschlusselement abgedeckt ist. Das Stellsystem und insbesondere der Antrieb oder die Steuerung sind eingerichtet, den Feindosierungszustand und den Grobdosierungszustand wechselweise einzunehmen. Während der Feindosierungszustand einer Zwischenstellung entspricht, in der das Verschlusselement den Massenstrom zu einer Abgabeöffnung reduziert (und nicht blockiert), dient der Grobdosierungszustand der Auswahl einer Abgabeöffnung. Der Grobdosierungszustand entspricht einem Zustand, in dem der Massenstrom durch eine Abgabeöffnung entweder vollständig blockiert ist, oder maximal ist. Der Grobdosierungszustand entspricht der Auswahlfunktion, während der Feindosierungszustand der Dosierungsfunktion entspricht. Da die Stellungen, die den entsprechenden Zuständen zugeordnet sind, erfindungsgemäß fließend ineinander übergehen, werden beide Zustände als Dosierungszustände bezeichnet. Eine Interpretation des Grobdosierungszustands als Auswahl bzw. als Weichenfunktion gibt jedoch eine der beiden Funktionen der erfindungsgemäßen Rohrweiche wieder, während die andere Funktion, d.h. das Dosieren, im Feindosierungszustand ausgeführt wird.

Es kann vorgesehen sein, dass die Breite der ersten Abgabeöffnung in Umfangsrichtung der Innenwand der Breite der zweiten Abgabeöffnung in Umfangsrichtung der Innenwand entspricht. Dadurch sind beide Abgabeöffnungen gleich groß. Insbesondere ist der Querschnitt der beiden Abgabeöffnungen identisch. Die beiden Abgabeöffnungen sind vorzugsweise symmetrisch zu einer Ebene, die die Zuführungsöffnung senkrecht schneidet und die sich durch die Mitte der Zuführungsöffnung erstreckt. Dieser symmetrische Aufbau erlaubt eine vereinfachte Umsetzung der Erfindung. Ferner wird dadurch ein Massenstrom ermöglicht, bei dem Ablagerungen von Schüttgut reduziert sind.

Vorzugsweise bilden die Verlaufsrichtung der ersten Abgabeöffnung und die Verlaufsrichtung der zweiten Abgabeöffnung einen Winkel von nicht mehr als 60°, 50° oder 45°. Die Verlaufsrichtung der Abgabeöffnung entspricht hierbei der Massenstromrichtung durch die Abgabeöffnung hindurch und entspricht dem Längsverlauf von Mündungen, die sich an die Abgabeöffnungen anschließen. Ferner ist vorgesehen, dass die Mitte der ersten Abgabeöffnung von der Mitte der zweiten Abgabeöffnung entlang der Umfangsrichtung der Innenwand um einen Winkel von nicht mehr als 150°, 120° oder 100° versetzt ist. Dadurch stehen die Abgabeöffnungen nahe beieinander, so dass die Stellung des Verschlusselements nur geringfügig geändert werden muss, um die Abgabe von einer Abgabeöffnung auf die andere Abgabeöffnung umzustellen und somit die Abgabeöffnung zu wählen oder zu wechseln. Darüber hinaus ermöglicht dies eine langgestreckte Bauweise der Rohrweiche, die platzsparend eingesetzt werden kann.

Typischerweise weisen die Abgabeöffnungen und die Zuführungsöffnung einen Durchmesser von ca. 5-40 cm, 8-20 cm oder 10-15 cm auf. Sowohl das Gehäuse als auch das Verschlusselement sind vorzugsweise aus Metall, insbesondere aus Stahl gefertigt. Eine Scheibe, welche eine der Stirnflächen der Rohrweiche abdeckt, auf der nicht die Antriebe positioniert sind, kann insbesondere auch aus einem durchsichtigen Werkstoff, vorzugsweise Kunststoff, zum Beispiel Polycarbonat, gefertigt sein. Die Stirnflächen verlaufen senkrecht zu der Innenwand und decken das Innere des Gehäuses ab.

Die Drehlagerung des Verschlusselements ist vorzugsweise außerhalb des Innenraums angeordnet, der von der Innenwand umgriffen wird. Der Antrieb kann insbesondere einen Elektromagneten, einen Spindelantrieb, einen pneumatischen Zylinder oder einen pneumatischen Drehantrieb umfassen.

Die erfindungsgemäße Rohrweiche wird vorzugsweise zur Förderung und Dosierung von Granulaten als Schüttgut, insbesondere von klebrigen Granulaten verwendet. Beispielsweise wird die erfindungsgemäße Rohrweiche verwendet, um Granulat, welches aus einem Vorlagebehälter mit Austragshilfe im freien Fall durch ein Rohr zwischen Vorlagenbehälter und Rohrweiche fällt, auf eine oder mehrere Abpackstationen zu verteilen. Die Abpackstationen bestehen im Wesentlichen aus einer Waage und gegebenenfalls aus einer Konstruktion, die eine Aufhängung von Gebinden, zum Beispiel Big-Bags, ermöglicht. Die Verbindung zwischen den Abpackstationen und der Rohrweiche erfolgt ebenfalls über Rohre, durch die das Schüttgut im freien Fall fällt. Diese können sich an die Mündungen der Abgabeöffnungen anschließen, falls diese nicht selbst zum Befestigen eines Gebindes verwendet werden.

Kurze Beschreibung der Zeichnungen
Fig. 1 zeigt eine Ausführungsform einer erfindungsgemäßen Rohrweiche und
Fig. 2 zeigt eine Ausführungsform einer nicht erfindungsgemäßen Rohrweiche.

### Detaillierte Beschreibung der Zeichnungen

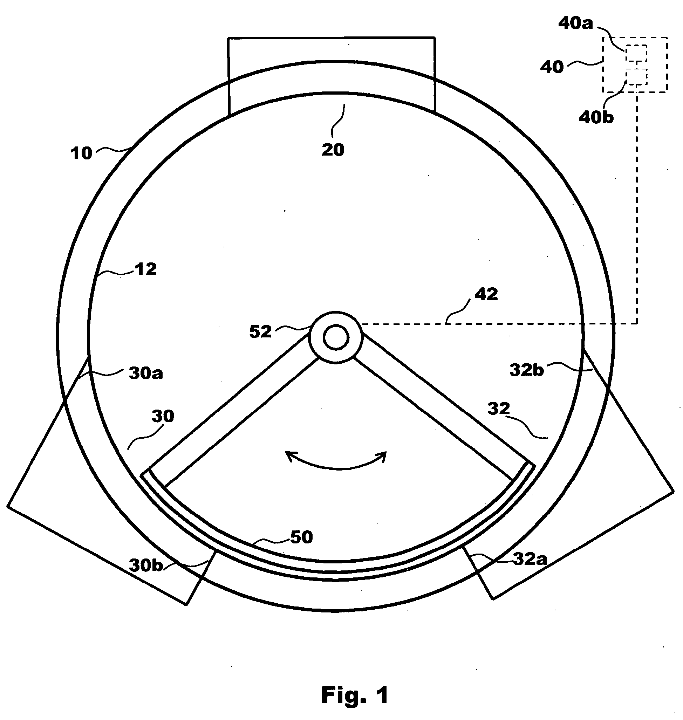

Fig. 1 zeigt eine Ausführung einer erfindungsgemäßen Rohrweiche mit einem zylindrischen Gehäuse 10. Das zylindrische Gehäuse 10 sieht eine Innenwand 12 vor, die einen kreisförmigen Querschnitt hat. Insbesondere ist zwischen den Endstellungen des Verschlusselements, welches im Weiteren näher beschrieben ist, die Innenwand mit einem kreisförmigen Querschnitt versehen. Die Rohrweiche umfasst ferner eine Zuführungsöffnung 20 sowie zwei Abgabeöffnungen 30, 32, die der Zuführungsöffnung gegenüber liegen. Die Abgabeöffnungen 30, 32 sind symmetrisch gegenüber der Zuführungsöffnung 20 angeordnet. Die in Figur 1 dargestellte Rohrweiche umfasst ferner ein Verschlusselement in Form eines Schiebers 50, der dem kreisförmigen Verlauf der Innenwand 12 folgt. Zwischen einer Seite des Schiebers 50, die der Innenwand 12 zugewandt ist, und der Innenwand 12 selbst besteht eine schmale Lücke, um eine reibungsfreie Relativbewegung zu ermöglichen. Bevorzugt wird diese Lücke so klein wie möglich ausgeführt. Der Schieber 50 ist über Radialstege mit einem Drehlager 52 verbunden, welches sich in der Mitte des Innenraums befindet, der von der Innenwand 12 definiert wird. Durch das Drehlager 52 ist das als Schieber ausgeführte Verschlusselement 50 in seiner Stellung relativ zu den Abgabeöffnungen 30, 32 drehbar gelagert. Ferner ist dadurch das Verschlusselement gegenüber der Zuführungsöffnung 20 drehbar gelagert. Es ist unmittelbar ersichtlich, dass durch diese Lagerung eine Änderung der Stellung des Schiebers 50 ermöglicht wird, um den Massenstrom von der Zuführungsöffnung 20 zu zumindest einer der Abgabeöffnungen gezielt zu steuern und somit eine Abgabeöffnung auszuwählen und ferner die Stärke des Massenstroms durch diese Abgabeöffnung kontinuierlich oder quasi kontinuierlich zu steuern.

Die in Fig. 1 dargestellte Rohrweiche umfasst ferner ein Stellsystem 40, das eine Steuerung 40a sowie einen damit verbundenen Antrieb 40b umfasst. Der Antrieb 40b ist zur Einstellung des Schiebers 50 vorgesehen. Das Stellsystem 40 und insbesondere der Antrieb 40b, ist über eine Verbindung 42 mit dem Schieber 50 verbunden. Die dargestellte Verbindung 42 ist lediglich symbolhaft dargestellt und ist vorzugsweise mechanisch bzw. bewegungsübertragend. Insbesondere hat der Antrieb 40b einen mechanischen Ausgang haben, welcher eine Bewegung vorsieht, wobei die Verbindung 42 diese Bewegung an das Verschlusselement in Form des Schiebers 50 direkt oder indirekt überträgt. Hierzu kann die Verbindung 42 an das Verschlusselement selbst angreifen, kann an Stege angreifen, mit denen das Verschlusselement mit dem Lager 52 verbunden ist, oder kann an Komponenten des Lagers 52 angreifen, die bewegungsübertragend mit dem Schieber 50, d.h. mit dem Verschlusselement (über die Stege) verbunden sind. Der Antrieb 40b kann pneumatischer oder auch elektromechanischer Art sein und seine Bewegung über die Verbindung 42 mittelbar oder unmittelbar an das Verschlusselement, d.h. an die Klappe 50, übertragen. Die in Fig. 1 dargestellte Rohrweiche und insbesondere das Stellsystem 40 bzw. die Steuerung 40a und/oder der Antrieb 40b ist eingerichtet, das Verschlusselement gemäß mehreren Zwischenstellungen anzusteuern. Durch diese Ansteuerung nimmt das Verschlusselement die Zwischenstellung ein. In der in Fig. 1 dargestellten Stellung deckt das als Schieber ausgeführte Verschlusselement 50 beide Abgabeöffnungen, d.h. die erste Abgabeöffnung 30 und die zweite Abgabeöffnung 32 nur teilweise ab, so dass der Massenstrom gegenüber einem maximal möglichen Massenstrom bei vollständig geöffneter Abgabeöffnung eingeschränkt ist.

Die erste Abgabeöffnung 30 sieht eine in Fig. 1 dargestellte linke Seitenwand 30a und eine rechte Seitenwand 30b vor, während die rechte, zweite Abgabeöffnung eine linke Seitenwand 32a und eine rechte Seitenwand 32b aufweist. Die Seitenwände erstrecken sich bis zur Innenwand 12 und bilden jeweils einen Teil einer Mündung, die die jeweilige Abgabeöffnung 30, 32 von der Innenwand 12 aus nach außen fortführt. Die rechte Seitenwand 30b der linken Abgabeöffnung 30 und die linke Seitenwand 32a der rechten Abgabeöffnung 32 bilden einander zugewandte Seitenwände. Zwischen diesen Seitenwänden besteht ein innerer Abstand, der auch als der minimale Abstand bezeichnet wird. In vergleichbarer Weise bilden die linke Seitenwand 30a der ersten Abgabeöffnung 30, links dargestellt, und die rechte Seitenwand 32b der rechts dargestellten zweiten Abgabeöffnung 32 einander abgewandte Seitenwände. Zwischen den beiden vorgenannten Seitenwänden besteht ein äußerer Abstand, der auch als der maximale Abstand bezeichnet wird. Die Mündungen können zylindrisch sein. In diesem Fall reduzieren sich die linken und die rechten Seitenwände auf entsprechende Seitenlinien. Diese erstrecken sich entlang des Längsverlaufs der Mündungen.

In einer Richtung senkrecht zur Zeichenebene erstreckt sich der Schieber 50 mindestens über die Tiefe der Abgabeöffnungen, so dass der Schieber 50 eine Abgabeöffnung vollständig abdeckt, wenn der Schieber 50 sich über der Abgabeöffnung 30 befindet.

Das Drehlager 52 ermöglicht eine Bewegung in Richtung des in Fig. 1 dargestellten Doppelpfeils um die Achse des Drehlagers 52.

Es ist anhand der Fig. 1 zu erkennen, dass die dort dargestellte Rohrweiche als Abgabeöffnungen nur die erste und die zweite Abgabeöffnungen 30, 32 umfasst. Ferner ist unmittelbar ersichtlich, dass in der dargestellten Stellung das Verschlusselement die erste und die zweite Abgabeöffnung nur teilweise abdeckt. Das Stellsystem 40 sieht zusammen mit dem Verschlusselement 50 vor, dass in jeder Zwischenstellung oder in einer Vielzahl von Zwischenstellungen die Summe der von dem Verschlusselement nicht abgedeckten Querschnittsflächen der ersten und der zweiten Abgabeöffnung im Wesentlichen konstant ist. Das Verschlusselement 50 erstreckt sich über eine umfängliche Distanz, die der Summe einer Breite einer der Abgabeöffnungen und dem inneren Abstand zwischen den beiden Abgabeöffnungen entspricht. Das Verschlusselement 50 kann sich alternativ über größere umfängliche Distanz erstrecken. Die Abgabeöffnungen 30, 32 und das Verschlusselement 50 sind eingerichtet, insbesondere durch die jeweilige umfängliche Erstreckung und durch den gegenseitigen Abstand, dass sich bei einer Änderung von einer Zwischenstellung auf eine andere die eine Abgabeöffnung von dem Verschlusselement 50 um den Betrag weiter geöffnet wird, um den die andere der beiden Abgabeöffnung von dem Verschlusselement 50 geschlossen wird. In allen Zwischenstellungen oder in einer Vielzahl von Zwischenstellungen ist die Summe der Querschnitte, um die das Verschlusselement die Abgabeöffnungen offen lässt, im Wesentlichen konstant.

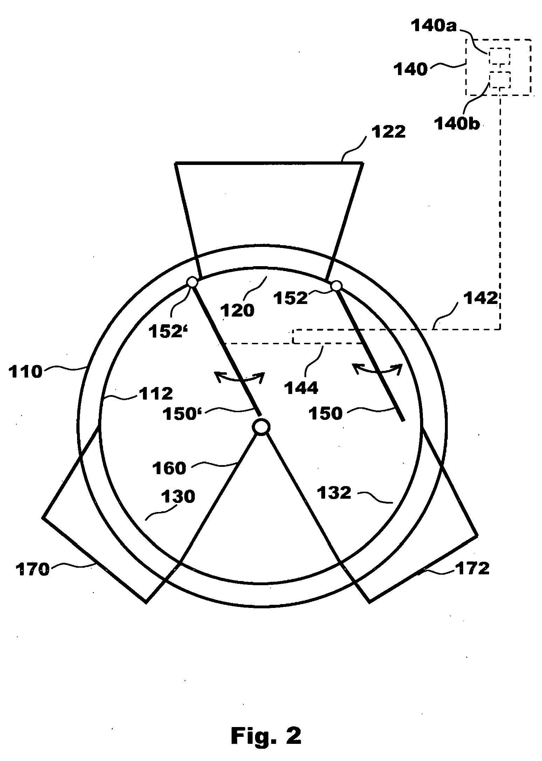

Die Fig. 2 zeigt eine Ausführungsform einer nicht erfindungsgemäßen Rohrweiche. Die in Fig. 2 dargestellte Rohrweiche umfasst ein Gehäuse 110, welches einen zylindrischen Innenraum vorsieht. Eine Innenwand 112 des Gehäuses 110 weist somit einen kreisförmigen Querschnitt auf. Die Rohrweiche umfasst ferner eine Zuführungsöffnung 120 sowie eine erste Abgabeöffnung und eine zweite Abgabeöffnung 130, 132. Die Abgabeöffnungen 130, 132 liegen der Zuführungsöffnung 120 gegenüber. Die Rohrweiche von Fig. 2 umfasst ferner ein zweiteiliges Verschlusselement in Form von zwei Klappen 150, 150', die an jeweiligen Drehlagern 152, 152' versetzt zu der Zuführungsöffnung 120 an der Innenwand 112 angeordnet sind. Die Klappen 150, 150' sind aufgrund der Drehlager 152, 152' jeweils gemäß der in Fig. 2 dargestellten Doppelpfeile schwenkbar. Ein feststehendes Trennelement 160 erstreckt sich von den Abgabeöffnungen 130, 132 in das Innere des Gehäuses 110, insbesondere bis zur Mitte des Innenraums, der von der Innenwand 112 umschlossen wird. Die Länge der Klappen 150, 150' entspricht im Wesentlichen dem Durchmesser des Innenraums, abzüglich der radialen Länge des Trennelements. In der Fig. 2 erstreckt sich das Trennelement von der Innenwand 112 bis zur Mitte und hat somit eine Länge, die einem Radius des kreisförmigen Innenraums entspricht. In gleicher Weise haben die Klappen 150, 150' eine Länge, die dem Radius des kreisförmigen Innenraums des Gehäuses 110 entspricht, der von der Innenwand 112 eingegrenzt ist. Ist somit eine der Klappen in Verschlussstellung, d.h. in einer Stellung, in der sich die Klappe 150' bis zu dem Trennelement 160 erstreckt, dann ist diejenige Abgabeöffnung 130 gesperrt, die sich auf der Seite der Klappe 150' befindet. Die Klappe 150' sperrt somit einen Massenstrom von der Zuführungsöffnung 120 zur Zuführungsöffnung 130 hin, und ermöglicht lediglich einen Massenstrom von der Zuführungsöffnung 120 bis zu der zweiten Abgabeöffnung 132. In Fig. 2 wird das Verschlusselement, welches von den zwei Klappen 150, 150' ausgebildet wird, in einer Endstellung, in der ein Massenstrom von der Zuführungsöffnung 120 unverringert der zweiten Abgabeöffnung 132, rechts dargestellt, zugeführt wird, während die erste Abgabeöffnung 130 keinen Massenstrom erhält. Die Rohrweiche ist eingerichtet, die Klappen 150, 150' in einer Zwischenstellung vorzusehen, in der beispielsweise ein reduzierter Massenstrom an eine der Abgabeöffnungen 130, 132 abgegeben wird. Dadurch lässt sich der Massenstrom durch diese Abgabeöffnungen dosieren, während gleichzeitig die Abgabeöffnung gewählt wird.

Hierzu ist das Stellsystem 140 und insbesondere ein Antrieb 140b des Stellsystems 140 über eine Verbindung 142 mit einem mechanischen Verbindungselement 144 verbunden, welches die beiden Klappen 150, 150' miteinander winkelfest verbindet. Insbesondere umfasst das Stellsystem 140 eine Steuerung 140a, die steuernd mit einem Antrieb 140b des Stellsystems 140 verbunden ist. Hierbei ist der Antrieb bzw. dessen mechanischer Ausgang über die mechanisch vorgesehene Verbindung 142 mit dem mechanischen Verbindungselement 144 verbunden, welches die beiden Klappen 150, 150' miteinander verbindet. Das mechanische Verbindungselement 144 ist eingerichtet, die Klappen 150, 150' miteinander zur synchronisieren, d.h. zueinander winkelfest vorzusehen. Durch das mechanische Verbindungselement 144 werden die Klappen 150, 150' gleichermaßen angesteuert und bleiben unabhängig von der Stellung parallel zueinander.

Das Trennelement 160 ist zur Mitte hin mit einem zylinderförmigen Abschlusselement terminiert, wobei die Abschlussklappen 150, 150' und die Drehlager 152, 152' angeordnet sind, so dass eine der Klappen in einer Endstellung mit dem Trennelement 160 abschließt. Gleichermaßen sind die Längen und die Anordnungen der Klappen derart vorgesehen, dass die Enden der Klappen sich an dem Trennelement 160 vorbeibewegen können oder zumindest nicht festgeklemmt werden. In einer weiteren, nicht dargestellten Ausführungsform ist die Länge der Klappen zusammen mit der Länge des Trennelements größer als der Durchmesser des Innenraums des Gehäuses 110, so dass die Enden der Klappen in ihrer Endstellung an dem Trennelement 160 anliegen. Das Trennelement 160 weist in der Fig. 2 zwei Fußpunkte auf, die den Orten der Drehlager 152,152' der Klappen 150, 150' diametral entgegengesetzt sind.

Die in Fig. 2 dargestellte Rohrweiche weist eine Zuführungsöffnung 120 auf, an die sich eine Mündung 122 anschließt, welche sich vom Gehäuse 110 weg erstreckt. Der Querschnitt der Mündung erweitert sich in einer Richtung, die radial von dem Gehäuse 110 weg führt. An die Abgabeöffnungen 130, 132' schließen sich ebenso jeweils Mündungen 170, 172 an, die sich von dem Gehäuse 110 weg erstrecken und sich in dieser Erstreckungsrichtung verjüngen. In einer bevorzugten Alternative einer Ausführung nach Figur 2 haben die Mündungen einen konstanten Querschnitt und verlaufen gerade. Die Mündungen haben gemäß der bevorzugten Alternative eine zylindrische, vorzugsweise kreiszylindrische Form.

In einer weiteren alternativen Ausführungsform, die eine Klappe als Verschlusselement sowie ein Trennelement wie das Trennelement 160 aufweist, ist das Drehlager der Klappe an einem zylinderförmigen Abschlusselement des Trennelements angeordnet. Das vom Drehlager entfernt gelegene Ende der Klappe ist daher in der Lage, einen Umfangsabschnitt zu überstreichen, der die Zuführungsöffnung der Rohrweiche umfasst. Je nach Stellung der Klappe wird daher der Massenstrom durch die Zuführungsöffnung in den Endpositiönen der einen oder der anderen Abgabeöffnung oder in Zwischenstellungen beiden Abgabeöffnung teilweise zugeführt. In diesem Fall hat die Klappe eine gegenüber der Breite der Zuführungsöffnung vernachlässigbare Dicke, um in Zwischenstellungen keinen Rückstau an der radialen äußeren Stirnseite der Klappe zu erzeugen. Die Dicke beträgt weniger als 15% , 10%, 5% oder 2% der Breite der Zuführungsöffnung und ist insbesondere nicht größer als 3 mm, 2 mm, 1.5 mm, 1 mm oder 0.7 mm. Das Profil der Klappe in Richtung der Drehachse kann ein im Falle einer konstanten Dicke ein Rechteck sein.

Die Klappe kann auch eine nicht konstante Dicke haben und sich beispielsweise von der Drehachse aus vorzugsweise kontinuierlich verringern Insbesondere kann das Profil der Klappe in Richtung der Drehachse ein symmetrisches Trapez sein. Alternativ kann die Dicke konstant sein. Der Verlauf der Klappe kann linear sein oder kann einem Bogen folgen. Insbesondere kann der Verlauf einer der Klappen zu der anderen Klappe hin gebogen sein. Bei einem trapezoiden Profil der Klappe können die Schenkel des Trapezes nicht gerade sondern konkav gekrümmt sein.

Die Klappe kann an der Drehachse eine Dicke von 20 mm, 10 mm, 5 mm, 2,5 mm oder 1 mm haben und an der gegenüberliegenden Seite eine geringere Dicke von 3 mm, 2 mm, 1.5 mm, 1 mm oder 0.7 mm haben.

Die vorgenannten Eigenschaften können die Eigenschaften einer Klappe, mehrerer Klappen oder aller Klappen der Rohrweiche sein.

Zwischen dem Verschlusselement und Stirnseiten der Rohrweiche, die senkrecht zur Innenwand verlaufen, kann ein Spalt vorgesehen sein. Die Größe dieses Spaltes beträgt höchstens 1,5 mm, 1 mm oder 0,5 mm.

### Bezugszeichen

- 10, 110: Gehäuse
- 12, 112: Innenwand
- 20, 120: Zuführungsöffnung
- 122: Mündung der Zuführungsöffnung
- 30, 32, 130, 132: Abgabeöffnungen
- 30a,b; 32a,b: Seitenwände der Mündungen der Abgabeöffnungen
- 40, 140: Stellsystem
- 40a, 140a: Steuerung
- 40b, 140b: Antrieb
- 42, 142: Verbindung
- 144: mechanisches Verbindungselement
- 50: Schieber
- 150, 150': Klappen
- 52, 152, 152': Drehlager
- 160: Trennelement
- 170, 172: Mündungen der Abgabeöffnungen

## Patentansprüche

1. Rohrweiche zur Förderung, Verteilung und Abfüllung von Schüttgut mit einem Gehäuse (10), einem Verschlusselement (50) und einem Stellsystem (40), welches eine Steuerung (40a) und einen Antrieb (40b) umfasst, wobei das Gehäuse (10) eine Innenwand (12) umfasst, in der eine Zuführungsöffnung (20) und mindestens zwei Abgabeöffnungen (30, 32) vorgesehen sind, das Verschlusselement zwischen der Zuführungsöffnung und den Abgabeöffnungen (30, 32) innerhalb der Innenwand des Gehäuses angeordnet ist, und ferner das Verschlusselement einen Schieber (50) umfasst, wobei das Verschlusselement (50') zur Änderung seiner Stellung relativ zu den Abgabeöffnungen (30, 32) drehbar gelagert ist, und das Stellsystem mit dem Verschlusselement (50) bewegungsübertragend verbunden und , zu der Änderung der Stellung des Verschlusselements (50') eingerichtet ist, wobei das Stellsystem (40) eingerichtet ist, das Verschlusselement gemäß einer Vielzahl von unterschiedlichen Zwischenstellungen relativ zu den Abgabeöffnungen (30, 32) anzusteuern, wobei in zumindest.einer der Zwischenstellungen die mindestens zwei Abgabeöffnungen (30, 32) durch das Verschlusselement (50) nur teilweise gegenüber der Zuführungsöffnung (20) abgedeckt sind, wobei das Stellsystem zusammen mit dem Verschlusselement vorsieht, dass in jeder Zwischenstellung die Summe der von dem Verschlusselement nicht abgedeckten Querschnittsflächen der ersten und der zweiten Abgabeöffnung im Wesentlichen konstant ist,
wobei das Verschlusselement einen Schieber (50) umfasst, dessen Verlauf mit einem radialen Versatz der Innenwand (12) folgt oder dessen Verlauf unmittelbar der Innenwand (12) folgt, und der um die Mitte des Innenraums der Innenwand drehbar gelagert ist, wobei die Innenwand (12) und der Schieber (50) sich entlang eines Abschnitts eines Zylinders oder einer Kugel erstrecken, **dadurch gekennzeichnet, dass** der Abstand zwischen einander zugewandten Seitenwänden (30b, 32a) der ersten und der zweiten Abgabeöffnung in Umfangsrichtung der Innenwand (12) größer ist als die Breite der ersten Abgabeöffnung (30) in Umfangsrichtung der Innenwand (12) und größer ist als die Breite der zweiten Abgabeöffnung (32) in Umfangsrichtung der Innenwand (12),
wobei das Stellsystem (40) einen Feindosierungszustand und einen Grobdosierungszustand aufweist, wobei das Stellsystem eingerichtet ist, den Grobdosierungszustand einzunehmen, wenn keine der beiden Abgabeöffnungen (30, 32) nur teilweise von dem Verschlusselement abgedeckt ist, und das Stellsystem eingerichtet ist, den Feindosierungszustand einzunehmen, wenn zumindest eine der beiden Abgabeöffnungen (30, 32) nur teilweise von dem Verschlusselement abgedeckt ist.

2. Rohrweiche nach Anspruch 1, wobei das Verschlusselement (50) eingerichtet ist, in einer ersten Endstellung eine erste der zwei Abgabeöffnungen (30) vollständig abzudecken, während eine zweite der zwei Abgabeöffnungen (32) gegenüber der Zuführungsöffnung zumindest teilweise geöffnet ist, und in einer zweiten Endstellung, die der ersten Endstellung entgegengesetzt ist, die zweite Abgabeöffnung (32) vollständig abzudecken, während die erste Abgabeöffnung (30) gegenüber der Zuführungsöffnung (20) zumindest teilweise geöffnet ist, wobei das Stellsystem (40) eingerichtet ist, das Verschlusselement (50) gemäß den Zwischenstellungen sowie gemäß der ersten und der zweiten Endstellung anzusteuern.

3. Rohrweiche nach Anspruch 1 oder 2, wobei das Stellsystem (40) eingerichtet ist, das Verschlusselement (50) gemäß mehreren Übergangsstellungen, die eine Untergruppe der Zwischenstellungen bilden, relativ zu den Abgabeöffnungen (30, 32) anzusteuern, wobei das Verschlusselement eingerichtet ist, in den Übergangsstellungen sowohl die erste als auch die zweite Abgabeöffnung teilweise abzudecken.

4. Rohrweiche nach einem der vorangehenden Ansprüche, wobei die Breite des Schiebers (50) in Umfangsrichtung der Innenwand (12) größer ist als der Abstand zwischen einander zugewandten Seitenwänden (30b, 32a) der ersten und der zweiten Abgabeöffnung in Umfangsrichtung der Innenwand (12).

5. Rohrweiche nach Anspruch 4, wobei die Breite des Schiebers (50) in Umfangsrichtung der Innenwand (12) kleiner ist als der Abstand zwischen einander abgewandten Seitenwänden (30a, 32b) der ersten und der zweiten Abgabeöffnung (30, 32) in Umfangsrichtung der Innenwand (12).

6. Rohrweiche nach einem der vorangehenden Ansprüche, wobei der Breite der ersten Abgabeöffnung (30) in Umfangsrichtung der Innenwand (12) der Breite der zweiten Abgabeöffnung (32) in Umfangsrichtung der Innenwand (12) entspricht und die beiden Abgabeöffnungen symmetrisch zu einer Ebene sind, die die Zuführungsöffnung (20) senkrecht schneidet und sich in der Mitte der Zuführungsöffnung (20) erstreckt.

7. Rohrweiche nach einem der vorangehenden Ansprüche, wobei die Verlaufsrichtung einer Mündung der ersten Abgabeöffnung (30), die von dem Gehäuse (10) weg weist, und die Verlaufsrichtung einer Mündung der zweiten Abgabeöffnung (32), die von dem Gehäuse (10) weg weist, einen Winkel von nicht mehr als 60°, 50°, oder 45° bilden und die Mitte der ersten Abgabeöffnung (30) von der Mitte der zweiten Abgabeöffnung (32) entlang der Umfangsrichtung der Innenwand (12) um einen Winkel von nicht mehr als 150°, 120° oder 100° versetzt ist.

## Claims

1. A pipe switch for conveying, distributing and filling bulk goods, having a housing (10), a closure element (50) and a setting system (40) which includes a control (40a) and a drive (40b), the housing (10) including an inner wall (12) in which a feed opening (20) and at least two discharge openings (30, 32) are provided, the closure element being arranged within the inner wall of the housing between the feed opening and the discharge openings (30, 32), and the closure element further comprising a slide (50), the closure element (50) being rotatably mounted in relation to the discharge openings (30, 32) for modifying its position, and the setting system being connected to the closure element (50) so as to transmit movement and being set up to modify the position of the closure element (50), wherein the setting system (40) is set up to control the closure element according to a plurality of different intermediate positions in relation to the discharge openings (30, 32), the at least two discharge openings (30, 32) being covered by the closure element (50) only partially in relation to the feed opening (20) in at least one of the intermediate positions, the setting system, together with the closure element, providing that in each intermediate position the sum of the cross-sectional areas of the first and of the second discharge opening not covered by the closure element is substantially constant, the closure element including a slide (50), the course of which follows the inner wall (12) with a radial offset or the course of which follows the inner wall (12) directly, and which is mounted so as to be rotatable about the middle of the interior of the inner wall, the inner wall (12) and the slide (50) extending along a section of a cylinder or a ball, **characterized in that** the spacing between side walls (30b, 32a), facing each other, of the first and of the second discharge opening in the circumferential direction of the inner wall (12) is greater than the width of the first discharge opening (30) in the circumferential direction of the inner wall (12) and greater than the width of the second discharge opening (32) in the circumferential direction of the inner wall (12), the setting system (40) having a fine metering state and a coarse metering state, the setting system being set up to assume the coarse metering state when neither of the two discharge openings (30, 32) is covered only partially by the closure element, and the setting system being set up to assume the fine metering state when at least one of the two discharge openings (30, 32) is covered only partially by the closure element.

2. The pipe switch as claimed in claim 1, wherein the closure element (50) is set up to cover a first of the two discharge openings (30) completely in a first end position, whilst a second of the two discharge openings (32) is at least partially open in relation to the feed opening, and in a second end position which is opposite the first end position, to cover the second discharge opening (32) completely whilst the first discharge opening (30) is at least partially open in relation to the feed opening (20), the setting system (40) being set up to control the closure element (50) according to the intermediate positions and according to the first and the second end position.

3. The pipe switch as claimed in claim 1 or 2, wherein the setting system (40) is set up to control the closure element (50) according to multiple transition positions, which form a subgroup of the intermediate positions, in relation to the discharge openings (30, 32), the closure element being set up to cover both the first and the second discharge opening partially in the transition positions.

4. The pipe switch as claimed in one of the preceding claims, wherein the width of the slide (50) in the circumferential direction of the inner wall (12) is greater than the spacing between side walls (30b, 32a), facing each other, of the first and of the second discharge opening in the circumferential direction of the inner wall (12).

5. The pipe switch as claimed in claim 4, wherein the width of the slide (50) in the circumferential direction of the inner wall (12) is smaller than the spacing between side walls (30a, 32b), facing each other, of the first and of the second discharge opening (30, 32) in the circumferential direction of the inner wall (12).

6. The pipe switch as claimed in one of the preceding claims, wherein the width of the first discharge opening (30) in the circumferential direction of the inner wall (12) corresponds to the width of the second discharge opening (32) in the circumferential direction of the inner wall (12) and the two discharge openings are symmetrical in relation to a plane which intersects the feed opening (20) in a perpendicular manner and extends in the middle of the feed opening (20).

7. The pipe switch as claimed in one of the preceding claims, wherein the orientation of a mouth of the first discharge opening (30), which points away from the housing (10), and the orientation of a mouth of the second discharge opening (32), which points away from the housing (10), form an angle of no more than 60°, 50°, or 45° and the middle of the first discharge opening (30) is offset from the middle of the second discharge opening (32) along the circumferential direction of the inner wall (12) about an angle of not more that 150°, 120° or 100°.

## Revendications

1. Vanne d'aiguillage pour le transport, la distribution et le versage de matières en vrac avec une enceinte (10), un élément de fermeture (50) et un système de réglage (40), qui comprend une commande (40a) et un entraînement (40b), dans laquelle l'enceinte (10) comprend une paroi intérieure (12), dans laquelle il est prévu une ouverture de chargement (20) et au moins deux ouvertures de déchargement (30, 32), l'élément de fermeture est disposé entre l'ouverture de chargement et les ouvertures de déchargement (30, 32) à l'intérieur de la paroi intérieure de l'enceinte, et l'élément de fermeture comprend en outre un tiroir (50), dans laquelle l'élément de fermeture (50) est monté de façon rotative pour changer sa position par rapport aux ouvertures de déchargement (30, 32), et le système de réglage est relié en transmission de mouvement à l'élément de fermeture (50) et est conçu pour le changement de la position de l'élément de fermeture (50), dans laquelle le système de réglage (40) est conçu pour commander l'élément de fermeture selon une multiplicité de positions intermédiaires différentes par rapport aux ouvertures de déchargement (30, 32), dans laquelle, dans au moins une des positions intermédiaires, lesdites au moins deux ouvertures de déchargement (30, 32) ne sont que partiellement couvertes par l'élément de fermeture (50) en face de l'ouverture de chargement (20), dans laquelle le système de réglage prévoit, de concert avec l'élément de fermeture, que dans chaque position intermédiaire la somme des aires de section transversale de la première et de la deuxième ouvertures de déchargement non couvertes par l'élément de fermeture soit essentiellement constante,
dans laquelle l'élément de fermeture comprend un tiroir (50), dont l'allure suit, avec un écart radial, la paroi intérieure (12) ou dont l'allure suit directement la paroi intérieure (12), et qui est monté de façon rotative autour du centre de l'espace intérieur de la paroi intérieure, dans laquelle la paroi intérieure (12) et le tiroir (50) s'étendent le long d'une partie d'un cylindre ou d'une sphère,
**caractérisée en ce que** la distance entre des parois latérales (30b, 32a) tournées l'une vers l'autre de la première et de la deuxième ouvertures de déchargement dans la direction périphérique de la paroi intérieure (12) est plus grande que la largeur de la première ouverture de déchargement (30) dans la direction périphérique de la paroi intérieure (12) et est plus grande que la largeur de la deuxième ouverture de déchargement (32) dans la direction périphérique de la paroi intérieure (12),
dans laquelle le système de réglage (40) présente un état de dosage fin et un état de dosage grossier, dans laquelle le système de réglage est conçu pour occuper l'état de dosage grossier, lorsqu'aucune des deux ouvertures de déchargement (30, 32) n'est que partiellement couverte par l'élément de fermeture, et le système de réglage est conçu pour occuper l'état de dosage fin, lorsqu'au moins une des deux ouvertures de déchargement (30, 32) n'est que partiellement couverte par l'élément de fermeture.

2. Vanne d'aiguillage selon la revendication 1, dans laquelle l'élément de fermeture (50) est conçu pour couvrir entièrement, dans une première position d'extrémité, une première des deux ouvertures de déchargement (30), tandis qu'une deuxième des deux ouvertures de déchargement (32) est au moins partiellement ouverte en face de l'ouverture de chargement, et pour couvrir entièrement, dans une deuxième position d'extrémité, qui est opposée à la première position d'extrémité, la deuxième ouverture de déchargement (32), tandis que la première ouverture de déchargement (30) est au moins partiellement ouverte en face de l'ouverture de chargement (20), dans laquelle le système de réglage (40) est conçu pour commander l'élément de fermeture (50) selon les positions intermédiaires ainsi que selon la première et la deuxième positions d'extrémité.

3. Vanne d'aiguillage selon la revendication 1 ou 2, dans laquelle le système de réglage (40) est conçu pour commander l'élément de fermeture (50) selon plusieurs positions de transition, qui forment un sous-groupe des positions intermédiaires, par rapport aux positions de déchargement (30, 32), dans laquelle l'élément de fermeture est conçu pour couvrir partiellement, dans les positions de transition, aussi bien la première que la deuxième ouverture de déchargement.

4. Vanne d'aiguillage selon l'une quelconque des revendications précédentes, dans laquelle la largeur du tiroir (50) dans la direction périphérique de la paroi intérieure (12) est plus grande que la distance entre des parois latérales tournées l'une vers l'autre (30b, 32a) de la première et de la deuxième ouvertures de déchargement dans la direction périphérique de la paroi intérieure (12).

5. Vanne d'aiguillage selon la revendication 4, dans laquelle la largeur du tiroir (50) dans la direction périphérique de la paroi intérieure (12) est plus petite que la distance entre des parois latérales détournées l'une de l'autre (30a, 32b) de la première et de la deuxième ouvertures de déchargement (30, 32) dans la direction périphérique de la paroi intérieure (12).

6. Vanne d'aiguillage selon l'une quelconque des revendications précédentes, dans laquelle la largeur de la première ouverture de déchargement (30) dans la direction périphérique de la paroi intérieure (12) correspond à la largeur de la deuxième ouverture de déchargement (32) dans la direction périphérique de la paroi intérieure (12) et les deux ouvertures de déchargement sont symétriques par rapport à un plan, qui coupe perpendiculairement l'ouverture de chargement (20) et qui s'étend au milieu de l'ouverture de chargement (20).

7. Vanne d'aiguillage selon l'une quelconque des revendications précédentes, dans laquelle la direction du tracé d'un orifice de la première ouverture de déchargement (30), qui est orienté vers l'extérieur de l'enceinte (10), et la direction du tracé d'un orifice de la deuxième ouverture de déchargement (32), qui est orienté vers l'extérieur de l'enceinte (10), forment un angle de pas plus de 60°, 50° ou 45° et le milieu de la première ouverture de déchargement (30) est décalé du milieu de la deuxième ouverture de déchargement (32) dans la direction périphérique de la paroi intérieure (12) d'un angle de pas plus de 150°, 120° ou 100°.
